# EUROPEAN PATENT APPLICATION

(11) **EP 3 176 887 A1**
(43) Date of publication of application: **07.06.2017**
(21) Application number: 15197873.1
(22) Date of filing: 03.12.2015
(51) Int. Cl.: H01S 3/109

(54) **EFFICIENT FREQUENCY CONVERSION OF MULTIMODE LASERS USING COORDINATED RESONATORS**

(71) Applicant: Qioptiq Photonics GmbH & Co. KG, 37081 Göttingen (DE)
(72) Inventor: MUELLER, Frank, D-81379 Muenchen (DE); HARTER, Arne, 81677 Munchen (DE)
(74) Representative: Eve, Rosemary Margaret

(57) **Abstract**

A system includes a first light source (102) that includes a resonator with a continuous wave, multi longitudinal mode laser (116) and an external resonator(104) that includes a nonlinear optical element (122). The external resonator is configured to receive an output from the first light source. A free spectral range of the external resonator is coordinated with a mode spacing of the first light source such that at least a significant fraction of the modes in the output from the first light source enters the external resonator and resonates in the external resonator, thereby enhancing an intensity of the modes that enter the external resonator, which leads to an efficient frequency conversion of the modes that enter the external resonator at the nonlinear optical element of the external resonator.

## Description

### FIELD OF THE INVENTION

This disclosure relates to systems and methods for efficient frequency conversion of longitudinal multimode lasers, for example, and, more particularly, relates to systems and methods for efficient frequency conversion of multimode lasers using coordinated internal and external resonators.

### BACKGROUND

Laser light is widely used as a convenient and precise tool in many different applications. However, for many desired laser wavelengths no cost effective direct laser sources are available that deliver sufficient output power. Some systems use a laser source emitting at another wavelength and then try to convert the wavelength. This can be done in a variety of ways that generally involve nonlinear interaction of laser light in an appropriately configured nonlinear optical element.

### SUMMARY OF THE INVENTION

In one aspect, a system includes a first light source that includes a resonator with a continuous wave, multi longitudinal mode laser and an external resonator that includes a nonlinear optical element. Typically, this nonlinear optical element will be a crystal. However, other materials are also possible. The external resonator is configured to receive an output from the first light source. A free spectral range of the external resonator is coordinated with a mode spacing of the first light source such that at least a significant fraction of the modes in the output from the first light source enters the external resonator and resonates in the external resonator, thereby enhancing an intensity of the modes that enter the external resonator, which leads to an efficient frequency conversion of the modes that enter the external resonator at the nonlinear optical element of the external resonator.

In some implementations, the mode spacing of the first light source matches or is an integral multiple of the free spectral range of the external resonator. In some implementations, the external resonator is configured to frequency convert all of the modes that enter the external resonator substantially simultaneously.

A typical embodiment includes a wavelength-selective element in the first light source. The wavelength-selective element in the first light source can be a fiber Bragg grating, for example.

In a typical implementation, the external resonator is a ring resonator or the like. Though, both linear and ring resonators, for example, may be used for second harmonic generation. In a typical implementation, the external resonator has a plurality of mirrors. The mirrors can be arranged, for example, in a bow tie configuration. A bow tie resonator is simply a specific example of a ring resonator. Some embodiments include a means for adjusting a position of one or more of the mirrors in the external resonator. This may facilitate changing the free spectral range of the external resonator. The means for adjusting the position of one or more of the mirrors in the external resonator can include a piezoelectric element in the external resonator.

According to some implementations, the nonlinear optical element in the external resonator is a single nonlinear optical element suitable for frequency conversion. The single non-linear optical element can be a bulk periodically poled crystal, for example.

Certain embodiments include a means for controlling the temperature of the wavelength-selective element, a means for controlling a position of the wavelength-selective element, or both. These means may include, for example, a piezoelectric element.

The continuous wave, multi longitudinal mode laser can be, for example, a diode laser.

The first light source can be optically coupled to the external resonator with no amplifier therebetween. However, in a typical implementation, other optical components may be between the first light source and the external resonator, for example an optical isolator, lenses, mirrors and the like.

Certain implementations include a means for providing feedback to help ensure that, during system operation: the mode spacing associated with the first light source continues to match the free spectral range associated with the linear resonator, and/or a central frequency of the first light source is an integer multiple of the free spectral range of the resonator. The means for providing feedback can be configured to influence a temperature of the wavelength-selective element, a temperature of the laser, a drive current to the laser, a position of one or more of the mirrors in the external resonator, or a position of the nonlinear optical element in the external resonator.

The system can be configured to produce a single output beam or multiple output beams from the external resonator. The output can be visible light and can have a power level of at least 200 milliwatts.

In some embodiments, the system includes an additional second light source and the external resonator is optically coupled to the first and the second light source. The second light source can be virtually any kind of light source. For example, the second light source can be a longitudinal single mode source, or a longitudinal multimode light source. Moreover, if the second light source is a longitudinal multimode light source, then the second light source can be configured such that a mode spacing associated with the second light source matches (e.g., substantially matches) or is an integral multiple of the free spectral range of the external resonator.

Some systems include an electro-optic modulator in an optical path in the external resonator. The electro-optic modulator can be configured to adjust the free spectral range of the external resonator.

In a typical implementation, there is a wavelength-selective element (e.g., an FBG) in the resonator of the first light source.

Frequency conversion can refer to virtually any kind of frequency conversion, including, for example, frequency doubling, sum-frequency generation, optical parametric oscillation, and the like.

In another aspect, a method includes outputting light from a first light source that includes a resonator with a continuous wave, multi longitudinal mode laser; and directing the light into an external resonator, wherein a free spectral range of the external resonator is coordinated with a mode spacing of the first light source such that at least a significant fraction of the modes in the output from the first light source enters the external resonator and resonates in the external resonator, thereby enhancing an intensity of the modes that enter the external resonator, which leads to an efficient frequency conversion of the modes that enter the external resonator at the nonlinear optical element of the external resonator.

In some implementations, one or more of the following advantages are present.

Systems and methods can be adapted to provide highly efficient frequency conversion of multimode lasers using coordinated internal and external resonators. These systems and methods can provide a high visible output power (e.g., on the order of 200mW and above).

Other features and advantages will be apparent from the description and drawings, and from the claims.

### BRIEF DESCRIPTION OF THE DRAWINGS

FIG. 1 is a schematic representation of an exemplary high-power, modular, frequency-doubled laser light source system.
FIG. 2 shows common-scale plots of frequency versus power indicating mode spacing data of an exemplary light source and frequency versus resonator transmissivity of an exemplary resonator.
FIG. 3 is a schematic representation of another exemplary high-power, modular, frequency-doubled laser light source system.
FIG. 4 is a schematic representation of yet another exemplary high-power, modular, frequency-doubled laser light source system.
FIG. 5 shows common-scale plots of frequency versus power and other data indicating mode spacing data of an exemplary light source and of an exemplary resonator and an exemplary effect of EOM functionality in the external resonator.
FIG. 6 is a schematic representation of still another exemplary high-power, modular, frequency-doubled laser light source system.
FIG. 7 is a schematic representation of an exemplary high-power, modular, optical parametric oscillator light source system.
FIG. 8 is a schematic representation of an exemplary high-power, modular, sum-frequency or difference-frequency generating laser light source system.

Like reference characters refer to like elements in the drawings.

### DETAILED DESCRIPTION

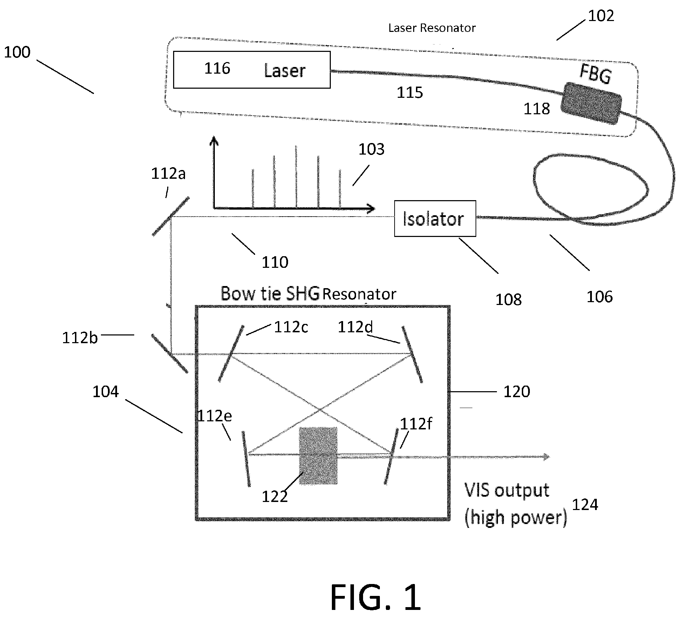

FIG. 1 is a schematic representation of an exemplary high-power, modular, frequency-doubled laser light source system 100.

The system 100 is generally operable to produce a visible light output that may be usable in a variety of applications including, for example, various different biotech and medical applications, especially where narrow line width is not particularly important (e.g., where widths of 10 GHz, 100 GHz or more are generally acceptable).

The system 100 has a first light source 102 that produces a multimode output 103, and an external resonator 104 (*e.g.,* a linear resonator) that is optically coupled to the first light source 102.

The optical coupling between the first light source 102 and the external resonator 104 can be implemented using virtually any kind of medium that accommodates the traversal of light. Examples include optical waveguides, optical fibers, other optical elements, or simply vacuum or air. In the illustrated example, the optical coupling is provided for by an optical fiber 106, an optical isolator 108, air 110, and mirrors 112a, 112b.

The optical isolator 108 in the optical path between the first light source 102 and the external resonator 104 can be virtually any kind of optical isolator. One such example is a Faraday isolator. Generally speaking, the optical isolator 108 is configured to allow transmission of light in only one direction (i.e., from the first light source 102 to the external resonator 104) and to prevent undesirable feedback into the first light source 102.

The first light source 102 has a laser resonator 114. There is a laser 116 and a wavelength-selective element 118 inside the laser resonator 114. The laser 116 is optically coupled to the wavelength-selective element 118 by an optical coupling medium 115 (e.g., an optical fiber, optical waveguide or the like) inside the laser resonator 114. In the illustrated embodiment, light emitted by the laser 116 is directed through the optical coupling medium 115, through the wavelength-selective element 118 and then out of the laser resonator 114. In a typical implementation, the length of the optical path from the laser 116 to the wavelength-selective element 118 is between about ½ meter and 1 meter.

In a typical implementation, the laser 116 is a continuous wave, multimode laser. In general, the continuous-wave nature of the laser means that it is continuously pumped and continuously emits light. In general, the multimode nature of the laser means that it produces multiple wavelengths of light (*see* 103). So, in general, the continuous wave, multimode laser 112 is a laser that is continuously pumped and continuously produces light at multiple wavelengths.

The wavelength-selective element 118 in the illustrated system 100 is a fiber Bragg grating (FBG). In general, an FBG is a type of distributed Bragg reflector constructed in a short segment of optical fiber that reflects particular wavelengths of light and transmits all others. Typically, this functionality can be achieved by creating a periodic variation in the refractive index of the fiber core, which results in a wavelength-specific dielectric mirror. The FBG, in the illustrated example, acts as a wavelength-selective element. It reflects light back toward the laser 116 with a reflectivity that strongly depends on the wavelength. The laser operates preferentially on those wavelengths that receive the strongest such feedback from the FBG. In this way, the FBG can be used to control the central wavelength, the number of wavelengths and the total linewidth emitted by the laser.

The wavelengths that are emitted by the laser and pass the FBG 118 in the illustrated example (there are five such wavelengths in the illustrated example) are shown schematically (at 103) in the bar graph just downstream of the optical isolator 108.

The x-axis of the illustrated bar graph represents wavelength and the y-axis of the illustrated bar graph represents magnitude (e.g., power or intensity). There are five wavelengths represented in the bar graph 116. The central wavelength of these five wavelengths has the highest magnitude and the wavelengths at either extreme (high and low) have the lowest magnitudes.

The mode spacing associated with the first light source 102 is represented in the illustrated bar graph by the amount of space (or wavelength range) between adjacent modes (or wavelengths). Typically, in one system, the spacing between every pair of adjacent modes is substantially the same. Also, typically, the mode spacing for a particular application may be on the order of 500 MHz (e.g., 400 MHz to 600 MHz). However, system-to-system the mode spacing can vary considerably. For example, in some systems, the mode spacing can be 100 megahertz (or thereabouts), whereas in other systems, the mode spacing can be 500 megahertz (or thereabouts). A wide variety of other values for mode spacing are possible as well.

Moreover, in a typical implementation, the first light source 102 may be adjustable to modify the modes and mode spacing. In this regard, the position of the FBG 118 relative to the laser 116 within the laser resonator 114 may be adjusted to modify the length of the optical path between the laser 116 and the FBG 118. This adjustability may be provided in a variety of ways, one of which may include a piezoelectric element driving a mechanical link to the FBG 118 to move it. In some implementations, the relative positions of the laser 116 and the FBG 118 are fixed, but can be set during manufacturing to achieve desired operating characteristics (e.g., mode spacing).

During system operation, the multimode output of the first light source 102 travels through the optical fiber 106, through the optical isolator 108, air 110, and is directed by mirrors 112a, 112b toward an input of the external resonator 104. The input of the external resonator 104 in the illustrated system, therefore, is configured to receive the continuous, longitudinal multimode output of the first light source 102.

The external resonator 104 can be virtually any kind of optical resonator. In the illustrated example, there is a housing 120 that includes the external resonator 104. The external resonator 120 in the illustrated example is a bow tie configured, second harmonic generator (SHG) (i.e., an enhancement resonator). There are four mirrors 112c-112f inside the external resonator 104 arranged to direct light along a bow tie shaped optical path inside the external resonator 104, and a nonlinear optical element 122 in the optical path configured to convert (e.g., double) the frequency of any light that passes through it.

Thus, the illustrated external resonator 104 is configured to generate, during system operation, second harmonics (this is also called frequency doubling) based on the continuous, multimode light that enters the external resonator 104 from the first light source 102.

In general, Second harmonic generation refers to a nonlinear optical process, in which photons with the same frequency interacting with a nonlinear material (e.g., crystal 122) are effectively "combined" to generate new photons with twice the energy, and therefore twice the frequency (half the wavelength) of the initial photons.

One characteristic of the external resonator is its free spectral range. Generally speaking, free spectral range refers to the frequency (or wavelength) spacing of the resonating modes in an optical resonator (e.g., external resonator 104).

In the illustrated system, the free spectral range of the external resonator 104 is coordinated with the mode spacing of the first light source 102. As such, at least a significant percentage (e.g., 50% or more, 60% or more, 70% or more, 80% or more, 90% or more, or all, etc.) of the modes in the continuous wave, multimode output from the first light source 102 enters the external resonator 104 and resonates there and is enhanced in intensity within the external resonator 104. This enhanced intensity leads to a highly efficient frequency conversion in the nonlinear optical element 122 of the external resonator 104. In some implementations, a 40%, 50% or higher conversion efficiency may be possible.

Coordinating the free spectral range of the external resonator 104 with the mode spacing of the first light source 102 typically means that the space between modes in the first light source 102 matches (or at least substantially matches) the spacing between modes (e.g., the free spectral range) in the external resonator 104. For example, in some implementations, the mode spacing in the first light source 102 may be considered substantially matching the free spectral range of the external resonator 104 if the absolute value of the difference between the mode spacing Δ*v* and the free spectral range *FSR* of the external resonator 104 (or an integral multiple *n* of the free spectral range) is smaller than the free spectral range divided by the finesse of the external resonator 104 (| Δ*v*-*n**FSR| <FSR/*finesse; with n=1, 2, 3...).*

With the mode spacing of the first light source 102 and the free spectral range of the external resonator 104 properly coordinated, at any given time during system operation, the external resonator 104 operates to simultaneously frequency convert (e.g., frequency double) all of the modes that enter the external resonator 104 in a highly efficient manner.

The output 124 of the illustrated system 100, which exits the external resonator 104, may be a visible, high power, multimode output. In other implementations, the output may be something other than a visible, high power, multimode output. The output will generally depend on the fundamental light source.

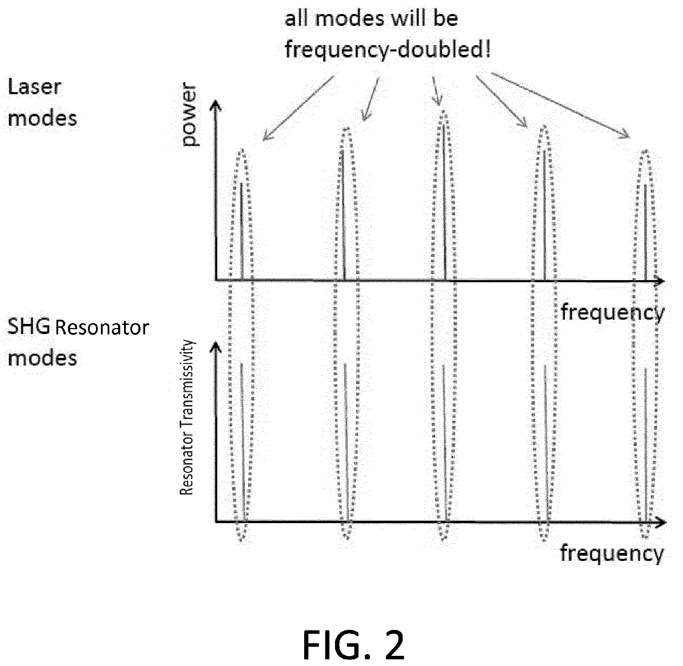

FIG. 2 shows two plots - an upper plot of frequency versus power for an exemplary laser and a lower plot of frequency versus resonator transmissivity for an SHG cavity. The upper plot shows the modes (or frequencies) and mode spacing produced by an exemplary first light source, whereas the lower plot shows the modes of an exemplary external resonator in a system, such as system 100. Like system 100 in FIG. 1, the first light source represented by the upper plot in FIG. 2 includes a laser and the external resonator represented by the lower plot in FIG. 2 is an SHG resonator.

The x-axis in each plot represents frequency. The y-axis in the upper plot represents power and the y-axis in the lower plot represents resonator transmissivity. The frequency scale in the upper plot matches the frequency scale in the lower plot. If, therefore, a line representing a mode of the first light source (in the upper plot) lines up with a line representing a mode of the external resonator (in the lower plot), that means that the frequencies of those modes match (or at least substantially match).

The first light source represented in the upper plot in FIG. 2 produces an optical output with multiple modes (or frequencies), each of which is represented by a vertical line that extends in an upward direction from the x-axis. The position of each vertical line along the x-axis in the upper plot corresponds to the frequency associated with that particular mode. The vertical height of each line above the x-axis in the upper plot represents the optical power associated with the corresponding mode. The horizontal distance between adjacent vertical lines in the upper plot represents the mode spacing associated with the exemplary first light source.

More specifically, in the illustrated example, the optical output from the first light source (represented in the upper plot) has five modes. Of course, in various implementations, the first light source 102 may be operable to produce more (or fewer) than five modes (e.g., 10 modes or 20 modes). The mode spacing is substantially equal between each pair of adjacent modes. The central mode of the five modes has the highest power and the wavelengths at either extreme (highest and lowest) have the lowest powers.

Similarly, the exemplary external resonator represented in the lower plot of FIG. 2 has multiple resonant frequencies (or modes), each of which is represented by a vertical line that extends in an upward direction from the x-axis. The position of each vertical line along the x-axis in the lower plot corresponds to the frequency associated with that particular mode. The vertical height of each line above the x-axis in the lower plot represents the transmissivity of the resonator associated with the corresponding mode. The horizontal distance between adjacent vertical lines in the lower plot represents the mode spacing associated with the exemplary external resonator.

More specifically, in the illustrated example, five modes of the external resonator are shown (represented in the lower plot). The mode spacing is substantially equal between each pair of adjacent modes. The graph depicts certain frequencies at which the resonator supports modes, i.e. only light at the depicted frequencies can in principle be coupled into the resonator.

Notably, in the illustrated implementation, each mode of the first light source lines up with a corresponding mode of the external resonator. In this regard, the frequency of each mode of the first light source (upper plot) is equal to - or at least substantially equal to -- the frequency of a corresponding one of the modes of the external resonator (lower plot). Moreover, the mode spacing of the first light source (upper plot) is equal to - or at least substantially equal to - the free spectral range of the external resonator (lower plot).

Accordingly, as noted in the illustrated figure, all of the modes produced by the first light source will be enhanced in the SHG and converted (e.g., doubled) by a nonlinear optical element in the SHG.

In various implementations, one or more aspects of the system 100 may be movable/adjustable to help ensure desired system operation. Moreover, in various implementations, the system 100 may be adapted to utilize one or more types of feedback to help ensure desired system operation.

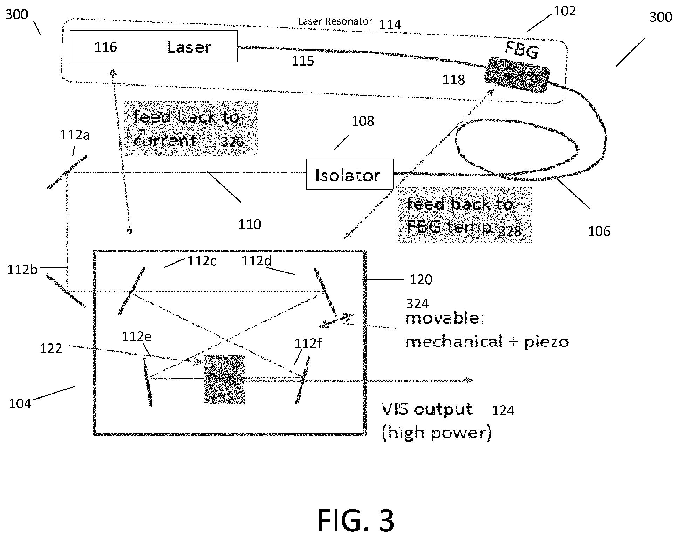

FIG. 3 is a schematic representation of an exemplary system 300 that is in many ways very similar to the system 100 in FIG. 1.

For example, when properly operating, the free spectral range of the external resonator 104 in system 300 is coordinated with the mode spacing of the first light source 102. As such, at least a significant percentage (e.g., 50% or more, 60% or more, 70% or more, 80% or more, 90% or more, or all, etc.) of the modes in the continuous wave, multimode output from the first light source 102 enters the external resonator 104 and resonates there and is enhanced in intensity within the external resonator 104. This enhanced intensity leads to a highly efficient frequency conversion in the nonlinear optical element 122 of the external resonator 104.

The system 300 in FIG. 3 differs from system 100 in that mirror 112d in system 300 is movable (see 324), feedback is provided (see 326) to control the laser current, and feedback is provided (see 328) to control the FBG temperature. Generally speaking, each of these differences helps make the system 300 better able to operate and continue operating in a desired manner.

Generally speaking, the movable mirror 112d in system 300 facilitates adjusting the geometry of the external resonator 104 so as to tune/fine tune the modes and free spectral range of the external resonator 104 to the first light source 102 to optimize resonance and stabilize the system. In a typical implementation, the mechanical adjustability may be provided by a piezoelectric mechanical drive element.

Stabilization and optimization of the system 300 may be achieved by implementing a Pound-Drever-Hall (PDH) technique to adjust the mirror position (or make other adjustments to the system). Generally speaking, according to PDH, a phase-modulated light (created, e.g., by modulating light from the input to the external resonator), which has a carrier frequency and two side bands (typically separated from the carrier in frequency by values on the megahertz level), may be directed into a resonator. Light reflected off the resonator may be measured, for example, using a photodetector. The reflected signal generally consists of the two side bands along with a phase shifted carrier component. The photodetector signal is then mixed down with a local oscillator that is in phase with the light modulation. After phase shifting and filtering, the resulting electronic signal provides a measure of how far the laser carrier is off resonance with the resonator. This signal may be used as feedback for active stabilization.

The feedback may be carried out using a proportional-integral-derivative (PID) controller, which takes the PDH error signal and converts it into a voltage that can be fed back to the first light source 102, or otherwise used, to keep the first light source 102 locked in resonance with the external resonator 104. This may be done by adjusting the laser 116 drive current (which can cause a shift in frequency), adjusting a cooling system for the FBG 118 (FBG temperature can cause a shift in frequency as well), and/or moving the movable mirror 112c in response to the voltage (or similar signal).

The cooling system for the FBG 118 can be virtually any kind of cooling system and may include, for example, pumped fluid (e.g., a cooling liquid or air) that flows near or over the FBG 118. The flowing fluid may be moved, for example, by a pump or a fan. Other cooling systems are possible as well.

There are, of course, various other schemes available for stabilizing and/or optimizing system 300.

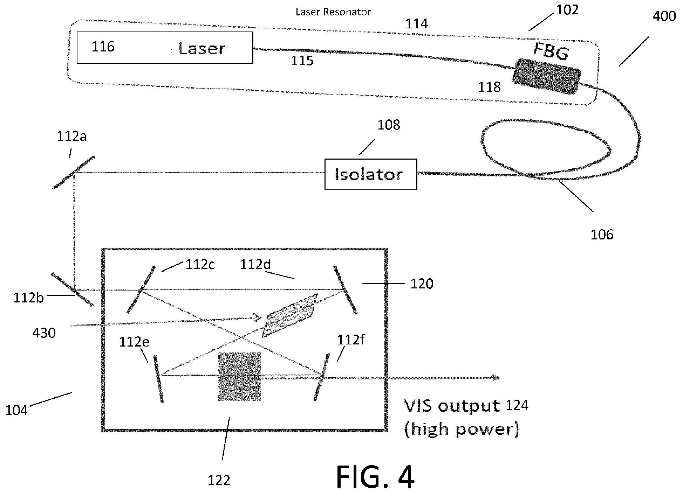

FIG. 4 is a schematic representation of an exemplary system 400 that is also similar to the system 100 in FIG. 1.

For example, when properly operating, the free spectral range of the external resonator 104 in system 400 is coordinated with the mode spacing of the first light source 102. As such, at least a significant percentage (e.g., 50% or more, 60% or more, 70% or more, 80% or more, 90% or more, or all, etc.) of the modes in the continuous wave, multimode output from the first light source 102 enters the resonator 120 of the external resonator 104 and resonates there and is enhanced in intensity within the external resonator 104. This enhanced intensity leads to a highly efficient frequency conversion in the nonlinear optical element 122 of the external resonator 104.

The system 400 in FIG. 4 differs from system 100 in that the system 400 has an electro-optic modulator 430 in the external resonator 104.

In general, an electro-optic modulator (EOM) is an optical device in which an element exhibiting an electro-optical effect is used to modulate a beam of light. The phase electro-optic effect refers to a change in the refractive index of a material resulting from the application of an electric field caused, for example, by applying a voltage difference to electrodes deposited on surfaces of the electro-optical crystal. The modulation may be imposed, for example, on the frequency, or other characteristic, of the beam.

In the illustrated implementation, the EOM 430 is configured to adjust the free spectral range of the external resonator. More particularly, the EOM 430 can change its refractive index along the optical path through the external resonator 104. This approximates a change in the effective length of the optical path through the resonator 120 of the external resonator 104, which changes the modes and free spectral range of the external resonator 104.

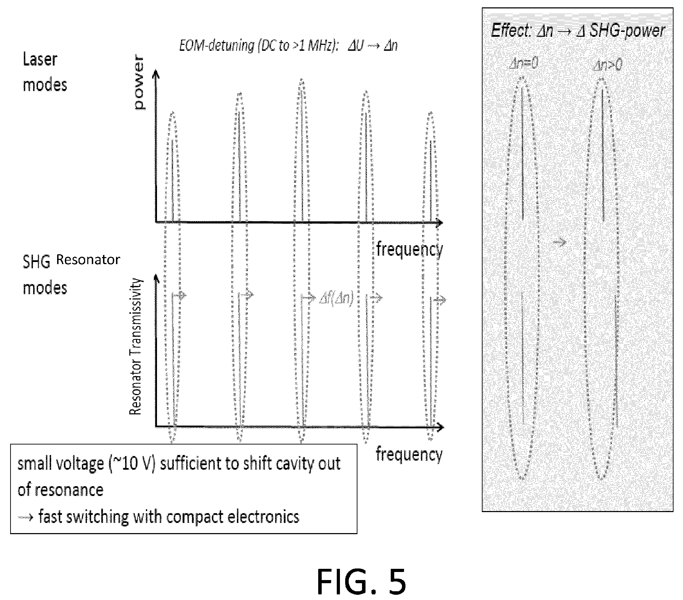

FIG. 5 shows the effect a voltage being applied to EOM 430 might have on a system 400. In particular, the illustrated figure shows that applying even a relatively small voltage (e.g., approx. 10 volts) can be sufficient, in some instances at least, to shift the external resonator 104 out of resonance with the first light source 102.

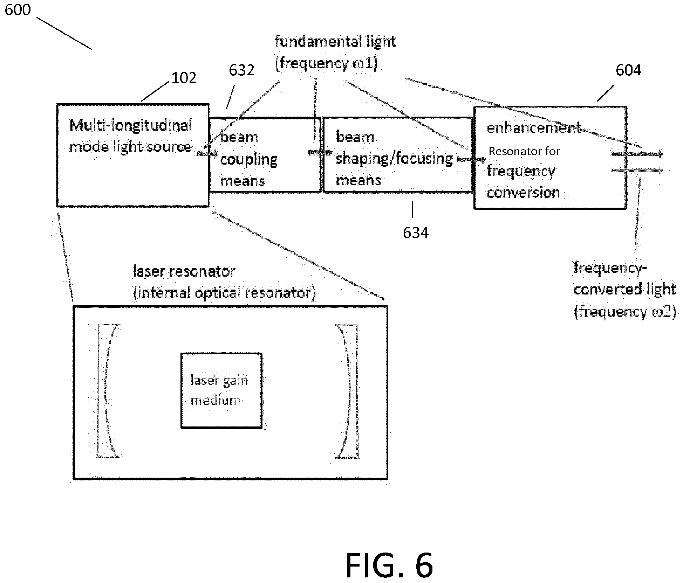

FIG. 6 is a schematic representation of an exemplary system 600 that is, in some ways, similar to system 100 in FIG. 1.

In particular, the illustrated system includes a first light source 102 (which in the illustrated example is a multi-longitudinal mode light source) coupled to an external resonator 604 (which in the illustrated example is referred to as an enhancement resonator for frequency conversion). More particularly, in the illustrated example, the first light source 102 is coupled to the external resonator 604 by a beam coupling means 632 (e.g., a mirror or other optical element) and a beam shaping/focusing means 634 (e.g., a lens or the like).

Generally speaking, in the illustrated system 600, the first light source 600 includes a resonator with a continuous wave, multimode laser and a wavelength-selective element in the resonator. The external resonator 604 is a second harmonic generator (SHG) and is configured to receive a continuous wave, multimode output from the first light source 102.

When properly operating, the free spectral range of the external resonator 604 in system 600 is coordinated with the mode spacing of the first light source 102. As such, at least a significant percentage (e.g., 50% or more, 60% or more, 70% or more, 80% or more, 90% or more, or all, etc.) of the modes in the continuous wave, multimode output from the first light source 102 enters the external resonator 604 and resonates there and is enhanced in intensity within the external resonator 604. This enhanced intensity leads to a highly efficient frequency conversion in the nonlinear optical element of the external resonator 104.

During system operation, the multimode output of the first light source 102 travels through the beam coupling means 632, through the beam shaping/focusing means 634 and into the external resonator 604. The external resonator 104 in the illustrated system 600 is generally operable to perform second harmonic generation. Moreover, the external resonator 604 in the illustrated example produces two output beams, based, for example, on frequency-doubling. One of the output beams is based on the fundamental light (produced by the first light source 102), at frequency ω1, and the other is based on frequency-converted light (produced in the enhancement resonator for frequency conversion 604), at frequency ω2. One or both of these beams may be useful, for example, in biotech or medical applications.

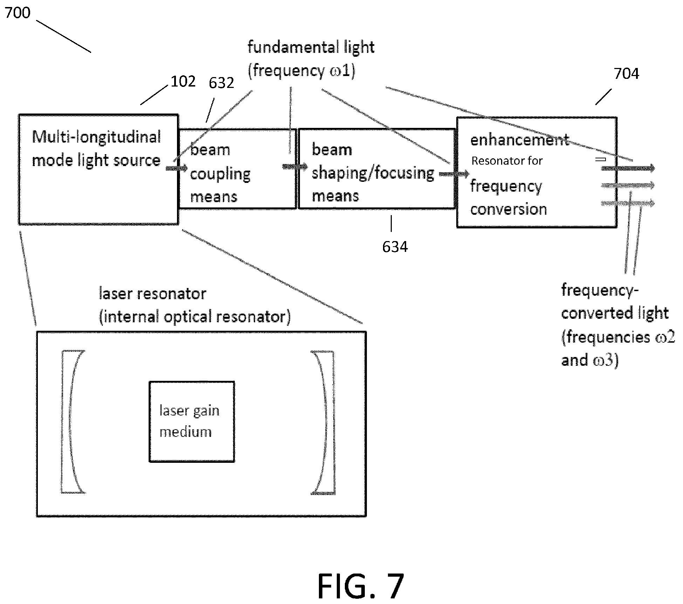

FIG. 7 is a schematic representation of an exemplary system 700 that is, in some ways, similar to system 600 in FIG. 6, except that the exemplary system 700 in FIG. 7 produces three output beams instead of two. One of the output beams is based on the fundamental light (produced by the first light source 102), at frequency ω1, and the other two are based on frequency-converted light, for example being produced via optical parametric oscillation (OPO) (produced in the enhancement resonator for frequency conversion 704), at frequency ω2 and ω3, respectively. In a typical implementation, at least two of the three beams would be useful, for example, in a biotech or medical application.

When properly operating, the free spectral range of the external resonator 704 in system 700 is coordinated with the mode spacing of the first light source 102. As such, at least a significant percentage (e.g., 50% or more, 60% or more, 70% or more, 80% or more, 90% or more, or all, etc.) of the modes in the continuous wave, multimode output from the first light source 102 enters the external resonator 704 and resonates there and is enhanced in intensity within the external resonator 704. This enhanced intensity leads to a highly efficient frequency conversion in the nonlinear optical element of the external resonator 704.

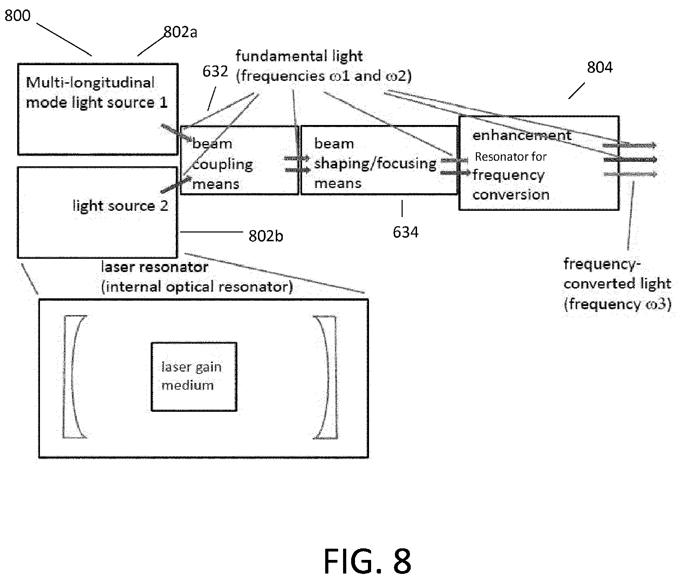

FIG. 8 is a schematic representation of an exemplary system 800 that is, in some ways, similar to the system 700 of FIG. 7. The system 800, however, has two light sources 802a, 802b, instead of just one. Each light source 802a, 802b can be virtually any kind of light source. In the illustrated example, however, light source 802a is a multi-longitudinal mode light source (e.g., similar to light source 102 described above) and light source 802b is a longitudinal single mode source. Of course, there are other possibilities as well. For example, light source 802b can be a longitudinal multimode light source.

In the illustrated system, the first light source 802a and the second light source 802b are optically coupled to the external resonator 804. More particularly, the optical outputs from the first light source 802a and the second light source 802b pass through the beam coupling means 632, the beam shaping/focusing means 634 and into the external resonator (i.e., the enhancement resonator for frequency conversion) 804.

The external resonator 804 in system 800 outputs three output beams instead of two. Two of the output beams are based on the fundamental light (produced by the first and second light sources 802a and 802b), at frequency ω1 and ω2, and the other one is based on frequency-converted light (produced in the enhancement resonator for frequency conversion 104), at frequency ω3.

When properly operating, the free spectral range of the external resonator 804 in system 800 is coordinated with the mode spacing of the first light source 802a. As such, at least a significant percentage (e.g., 50% or more, 60% or more, 70% or more, 80% or more, 90% or more, or all, etc.) of the modes in the continuous wave, multimode output from the first light source 802a enters the resonator of the external resonator 804 and resonates there and is enhanced in intensity within the external resonator 804. This enhanced intensity leads to a highly efficient frequency conversion in the nonlinear optical element of the external resonator 804.

A number of embodiments of the invention have been described. Nevertheless, it will be understood that various modifications may be made without departing from the spirit and scope of the invention.

For example, the external resonator can be virtually any kind of optical resonator. In some implementations, the single nonlinear optical element in the external resonator is a bulk periodically poled crystal. However, other types of nonlinear optical elements may work as well.

The one or more light sources can be virtually any kind of light sources.

The one or more light sources may be optically coupled to one or more external resonators in a variety of different ways. Moreover, the optical components that couple the output(s) of the one or more lights sources to the one or more external resonators may vary considerable in design or arrangement.

In certain implementations, one or more of the components having been described herein as present in a particular embodiment may be excluded. Likewise, other components, not specifically mentioned herein may be added. Also in certain implementations, mirrors may be directly coated to the nonlinear optical element and/or nonlinear optical elements combining several qualities in one like non-linear frequency-conversion, piezo-activity, electro-optic effect. Other ways of combining the functionality of various components disclosed herein are possible.

The systems disclosed may be adapted to produce output light having a wide range of possible power levels. For example, in one implementation, the visible light that is output from the system has a power level of at least 200 milliwatts. This can vary, of course. As an example, the output power level may be between 100 and 300 milliwatts or may be in an even broader range of power value.

This disclosure refers to frequency conversion. Of course, a wide variety of frequency conversion techniques are possible including, for example, second harmonic generation (SHG), sum-frequency generation (SFG), difference frequency generation (DFG), optical parameter oscillation (OPO), etc. It should be understood that any relative terminology used herein (e.g., " upper", " lower", " above", " below", " front", " rear," etc.) is solely used for the purposes of clarity and is not intended to limit the scope of what is described here to require particular positions, orientations or orders. Accordingly, such relative terminology should not be construed to limit the scope of the present application.

The term substantially, and similar words, such as substantial, are used herein. Unless otherwise indicated, substantially, and similar words, should be construed broadly to mean completely and almost completely (e.g., for a measurable quantity this might mean 99% or more, 95% or more, 90% or more, 85% or more).

Other implementations are within the scope of the claims.

## Claims

1. A system comprising:
a first light source that includes a resonator with a continuous wave, multi longitudinal mode laser; and
an external resonator that includes a nonlinear optical element, wherein the external resonator is configured to receive an output from the first light source,
wherein a free spectral range of the external resonator is coordinated with a mode spacing of the first light source such that at least a significant fraction of modes in the output from the first light source enters the external resonator and resonates in the external resonator, thereby enhancing an intensity of the modes that enter the external resonator, which leads to an efficient frequency conversion of the modes that enter the external resonator at the nonlinear optical element of the external resonator.

2. The system of claim 1, wherein every mode in the output from the first light source enters the external resonator and resonates in the external resonator.

3. The system of claim 1, wherein the mode spacing of the first light source matches or is an integral multiple of the free spectral range of the external resonator.

4. The system of claim 1, wherein the external resonator is configured to frequency convert all of the modes that enter the external resonator substantially simultaneously.

5. The system of claim 1, further comprising a wavelength-selective element in the first light source.

6. The system of claim 5, further comprising:
a means for controlling a temperature of the wavelength-selective element; and/or
a means for controlling a position of the wavelength-selective element.

7. The system of claim 1, further comprising a means for adjusting a position of one or more optical elements in the external resonator in order to change the free spectral range of the external resonator.

8. The system of claim 1, wherein the nonlinear optical element in the external resonator is a single non-linear crystal suitable for frequency conversion.

9. The system of claim 1, wherein the first light source is optically coupled to the external resonator with no amplifier therebetween.

10. The system of claim 1, wherein the system comprises an optical isolator between the first light source and the external resonator.

11. The system of claim 1, further comprising a means for providing feedback to help ensure that, during system operation:
the mode spacing associated with the first light source continues to match the free spectral range associated with the linear resonator, and/or
a mode of the first light source matches or is an integer multiple of the free spectral range of the resonator.

12. The system of claim 11, wherein the means for providing feedback is configured to influence a temperature of the wavelength-selective element, a drive current to the laser, or a position of one or more of the mirrors in the external resonator.

13. The system of claim 1, further comprising a second light source, wherein the external resonator is optically coupled to the second light source, and wherein the second light source is a longitudinal single mode light source or a longitudinal multimode light source.

14. The system of claim 1, further comprising an electro-optic modulator in an optical path of the external resonator, wherein the electro-optic modulator is configured to adjust the free spectral range of the external resonator.

15. The system of claim 1 configured to output a visible light from the external resonator,
wherein the visible light has a power level of at least 200 milliwatts.

16. A method comprising:
outputting light from a first light source that includes a resonator with a continuous wave, multi longitudinal mode laser; and
directing the light into an external resonator, wherein a free spectral range of the external resonator is coordinated with a mode spacing of the first light source such that at least a significant fraction of the modes in the output from the first light source enter the external resonator and resonate in the external resonator, thereby enhancing an intensity of the modes that enter the external resonator, which leads to an efficient frequency conversion of the modes that enter the external resonator at the nonlinear optical element of the external resonator.
